# EUROPEAN PATENT APPLICATION

(11) **EP 4 682 785 A1**
(43) Date of publication of application: **21.01.2026**
(21) Application number: 25783918.3
(22) Date of filing: 16.05.2025
(51) Int. Cl.: G06N 20/20, G06N 5/00

(54) **METHOD AND SYSTEM FOR SPECIFYING MODEL ON BASIS OF ARTIFICIAL INTELLIGENCE MODEL INCLUDING PLURALITY OF MODELS**

(30) Priority: 17.05.2024 KR 20240064552
(71) Applicant: LG Management Development Institute Co., Ltd., Seoul 07336 (KR)
(72) Inventor: CHOI, Ye Muk, Dongjak-gu, Seoul 07074 (KR)
(74) Representative: BCKIP Part mbB
(86) International application number: PCT/KR2025/006677
(87) International publication number: WO 2025/239711

(57) **Abstract**

A method for specifying a model based on an artificial intelligence model including a plurality of models according to an embodiment of the present invention comprises: performing MoE (Mixture of Experts) architecture-based training based on an artificial intelligence model which is a combination of a plurality of specialized models and a router (gating network); obtaining specialized model feature information which is information that specifies features of the specialized models based on the performed MoE architecture-based training; generating a specialized module model which is a specialized model that is matched with the obtained specialized model feature information and is independent and discrete; obtaining given domain information; detecting specialized model feature information of a feature corresponding to the obtained domain information; extracting a specialized module model that is matched with the detected specialized model feature information; constructing a DMoE model which is an artificial intelligence model which is a combination of the extracted specialized module model and the router; and providing output data for given input data based on the constructed DMoE model.

## Description

### [Technical Field]

The present invention relates to a method for specifying a model based on an artificial intelligence model including a plurality of models and a system therefor. More specifically, the present invention relates to a method for specifying a model based on a MoE (Mixture of Experts) that implements modularization of a given specialized model within a MoE model and a system therefor.

### [Background Art]

In general, artificial intelligence (AI) is implemented through multiple AI models and deep learning based on them.

Such AI is being developed to provide various services by considering the user's context (e.g., circumstances, environment, and/or intent).

However, when processing specific tasks based on large-volume data, there are limitations arising from considerable computational costs and time required for this.

As a result, the use of AI models in on-device environments which are gaining attention recently is facing certain constraints.

To address this issue, conventional approaches have employed model architectures such as MoE (Mixture of Experts).

MoE refers to a machine learning model architecture that solves complex problems by combining multiple expert models.

Such a MoE may include expert models, which are a number of small networks designed to learn different parts and/or different features of given data and perform corresponding data processing operations, and a gating network, which evaluates the performance of each expert model and decides which expert model is most suitable for being allocated a specific task based on given data from the evaluation.

According to the MoE architecture, upon receiving given input data, the gating network determines probabilistic or deterministic task allocation for each expert model. The selected expert models then perform their respective tasks and return the results, thereby enabling data processing for a specific task.

By leveraging such MoE architectures, AI models can enhance overall efficiency and performance by selectively activating specific components when handling complex tasks or large datasets and concentrating computational resources.

However, conventional MoE architectures require a high level of VRAM and present considerable challenges in the fine-tuning process.

Moreover, conventional MoE approaches are intended to manage large-sized models efficiently, but they have limitations in supporting the efficiency of the remaining resources that are not activated for the given task.

Furthermore, in conventional approaches within this technical field, services are typically provided using one-size-fits-all AI models, which presents problems in quickly and easily achieving AI analysis performance that is best suited to a given context.

### [Disclosure]

### [Technical Problem]

One embodiment of the present invention has been devised to address the aforementioned problems, and aims to implement a method for specifying a model based on a MoE (Mixture of Experts) that implements modularization of a given specialized model within a MoE model.

However, technical objects to be achieved by the present invention and the embodiments of the present invention are not limited to the aforementioned technical objects, and other technical objects may be present.

### [Technical Solution]

An embodiment of the present invention provides a method in which a computing system including a memory and a processor specifies a model based on an artificial intelligence model including a plurality of models, the method comprising: performing MoE (Mixture of Experts) architecture-based training based on an artificial intelligence model which is a combination of a plurality of specialized models and a router (gating network); obtaining specialized model feature information which is information that specifies features of the specialized models based on the performed MoE architecture-based training; generating a specialized module model which is a specialized model that is matched with the obtained specialized model feature information and is independent and discrete; obtaining given domain information; detecting specialized model feature information of a feature corresponding to the obtained domain information; extracting a specialized module model that is matched with the detected specialized model feature information; constructing a DMoE model which is an artificial intelligence model which is a combination of the extracted specialized module model and the router; and providing output data for given input data based on the constructed DMoE model.

In another aspect, the specialized model is an independently pre-trained artificial intelligence model, and the router is an artificial intelligence module that controls a model task.

In another aspect, the obtaining of specialized model feature information comprises: monitoring how a task for each of the plurality of specialized models is allocated by the router during the MoE architecture-based training; and obtaining the specialized model feature information for each of the plurality of specialized models based on the monitored task allocation state.

In another aspect, the specialized model feature information includes first type information which specifies one of preset specialized model feature categories based on user input.

In another aspect, the specialized model feature information includes second type information which specifies a feature of the specialized model in natural language.

In another aspect, the specialized model feature information includes at least one of first type information, which specifies one of preset specialized model feature categories based on user input, and second type information, which specifies a feature of the specialized model in natural language, and includes third type information which further specifies input data and output data of the specialized model.

In another aspect, the generating of a specialized module model comprises: matching the obtained specialized model feature information with a specialized model corresponding to the specialized model feature information; and organizing each specialized model matched with the specialized model feature information separately and discretely in a database.

In another aspect, the domain information is information that defines a domain that specifies at least one feature among data, rules, terminology, problem definitions, and processes for a given task.

In another aspect, the obtaining of the domain information comprises: obtaining given input data; and identifying a domain corresponding to the obtained input data.

In another aspect, the obtaining of specialized model feature information further comprises generating a tag for specifying each task allocated by the router, and the detecting of specialized model feature information corresponding to the domain information comprises detecting specialized model feature information of a feature corresponding to the domain information by comparing the at least one generated tag with the domain information.

In another aspect, the detecting of specialized model feature information corresponding to the domain information further comprises filtering the at least one generated tag based on the time the tag is generated.

Another embodiment of the present invention provides a system for specifying a model based on an artificial intelligence model including a plurality of models, the system comprising: at least one memory; and at least one processor that retrieves at least one application stored in the memory and specifies a model based on an artificial intelligence model including a plurality of models, wherein instructions of the processor include instructions for performing the steps: performing MoE (Mixture of Experts) architecture-based training based on an artificial intelligence model which is a combination of a plurality of specialized models and a router (gating network); obtaining specialized model feature information which is information that specifies features of the specialized models based on the performed MoE architecture-based training; generating a specialized module model which is a specialized model that is matched with the obtained specialized model feature information and is independent and discrete; obtaining given domain information; detecting specialized model feature information of a feature corresponding to the obtained domain information; extracting a specialized module model that is matched with the detected specialized model feature information; constructing a DMoE model which is an artificial intelligence model which is a combination of the extracted specialized module model and the router; and providing output data for given input data based on the constructed DMoE model.

### [Advantageous Effects]

A method for specifying a model based on an artificial intelligence model including a plurality of models and a system therefor according to an embodiment of the present invention have the effect of identifying a feature of each specialized model within a given MoE model and modularizing each specialized model into a compact size that allows for reuse and sharing by reflecting the feature. Thus, it is possible to more accurately, quickly, and efficiently sort and select specialized models that implement a data processing process optimized for a specific domain and to facilitate flexible expansion or reduction of the MoE model accordingly.

Furthermore, a method for specifying a model based on an artificial intelligence model including a plurality of models and a system therefor according to an embodiment of the present invention have the effect of rapidly and flexibly constructing a customized MoE model optimized for a specific domain using a specialized model modularized into a reusable and shareable size and accordingly providing output data through efficient task processing. Thus, it is possible to provide a MoE model with enhanced data processing speed and improved inference performance and support a variety of services accordingly, thereby promoting improvements in service performance and quality.

The effects of the present invention are not limited to the foregoing, and other effects not mentioned herein will be able to be clearly understood by those skilled in the art from the following description.

### [Description of Drawings]

FIG. 1 illustrates an example block diagram of a computing system for implementing a MoE architecture-based model provision service according to one embodiment of the present invention.
FIG. 2 illustrates an example block diagram of a computing device that implements a MoE architecture-based model provision service according to one embodiment of the present invention.
FIG. 3 illustrates an example block diagram of another aspect of a computing device that implements a MoE architecture-based model provision service according to one embodiment of the present invention.
FIG. 4 illustrates an internal block diagram of an AI agent model according to one embodiment of the present invention.
FIG. 5 illustrates a flowchart for explaining a MoE model provision method according to one embodiment of the present invention.
FIG. 6 illustrates a conceptual diagram for explaining a MoE model provision method according to one embodiment of the present invention.
FIG. 7 illustrates a flowchart for explaining a method for specifying a model based on MoE according to one embodiment of the present invention.
FIG. 8 illustrates a conceptual diagram for explaining a method for specifying a model based on MoE according to one embodiment of the present invention.
FIG. 9 illustrates an example of specialized model feature information according to one embodiment of the present invention.
FIG. 10 illustrates a flowchart for explaining a method for providing an AI agent based on a MoE-applied LLM according to one embodiment of the present invention.
FIG. 11 shows a conceptual diagram for explaining a method for providing an AI agent based on a MoE-applied LLM according to one embodiment of the present invention.

### [Mode for Invention]

As the present invention may make various changes and have several embodiments, specific embodiments will be illustrated in a drawing and described in a detailed description. Advantages and features of the present invention and methods for achieving them will be made clear from the embodiments described below in detail with reference to the accompanying drawings. The present invention may, however, be embodied in many different forms and should not be construed as being limited to the embodiments set forth herein. In the following embodiments, terms such as "first", "second", etc., are used to distinguish one component from another component rather than for a restrictive meaning. Singular expressions are intended to include plural expressions unless the context clearly indicates otherwise. Terms such as "include", "comprise", or "have" indicate the presence of features or components described in the specification, but do not preclude the possibility of addition of one or more other features or components. In the drawings, the sizes of components may be exaggerated or reduced for convenience of explanation. For example, the sizes and thicknesses of the components shown in the drawings are arbitrarily shown for convenience of explanation, and thus the present invention is not necessarily limited to those shown in the drawing.

Hereinafter, embodiments of the present invention will be described in detail with reference to the accompanying drawings. When described with reference to the drawings, identical or corresponding components will be given the same reference numerals, and redundant description of these components will be omitted.

[Exemplary System for Implementing MoE Architecture-Based Model Provision Service]

Hereinafter, an exemplary system for implementing a MoE (Mixture of Experts) architecture-based model provision service that implements modularization of a given specialized model within a MoE model will be described in detail with reference to the accompanying drawings.

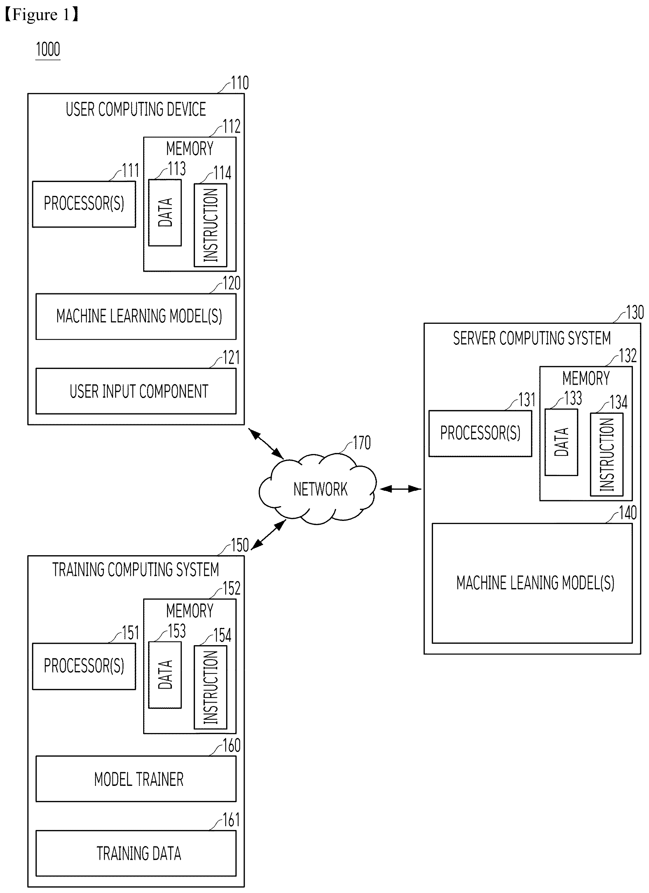

FIG. 1 illustrates an example block diagram of a computing system for implementing a MoE architecture-based model provision service according to one embodiment of the present invention.

Referring to FIG. 1, a computing system 1000 for implementing a MoE architecture-based-model provision service according to the present invention includes a user computing device 110, a server computing system 130, and a training computing system 150, and the devices are capable of communicating via a network 170.

A MoE architecture-based-model provision service that implements modularization of a given specialized model within a MoE model according to an embodiment of the present invention 1) may be implemented and provided locally by the user computing device 110, 2) may be implemented and provided in the form of a web service by the server computing system 130 communicating with the user computing device 110, or 3) may be implemented and provided through interoperation between the user computing device 110 and the server computing system 130.

In this case, in the embodiment, the user computing device 110 and/or the server computing system 130 may train a machine learning model 120 and/or 140 through interaction with the training computing system 150 connected communicatively via the network 170. The training computing system 150 may be separate from the server computing system 130 or may be a part of the server computing system 130.

Also, in this case, an artificial intelligence model 1) may be directly trained locally by the user computing device 110, 2) may be trained through interaction between the server computing system 130 and the user computing device 110 via the network 170, or 3) may be trained by a separate training computing system 150 using various training and learning techniques. In addition, the artificial intelligence model trained by the training computing system 150 may be implemented in such a manner as to be provided/updated by being transmitted via the network 170 to the user computing device 110 and/or the server computing system 130.

In some embodiments, the training computer system 150 may be a part of the server computing system 130 or a part of the user computing device 110.

The user computing device 110 may include all types of computing devices, such as smart phone, mobile phone, digital broadcasting device, personal digital assistant (PDA), portable multimedia player (PMP), desktop computer, wearable device, embedded computing device, and/or tablet PC.

Such a user computing device 110 includes at least one processor 111 and memory 112. Here, the processor 111 may include at least one of a central processing unit (CPU), graphics processing unit (GPU), application-specific integrated circuits (ASICs), digital signal processors (DSPs), digital signal processing devices (DSPDs), programmable logic devices (PLDs), field-programmable gate arrays (FPGAs), controllers, micro-controllers, microprocessors, and/or other electrical units for performing functions or a plurality of electrically connected processors.

The memory 112 may include one or more non-transitory/transitory computer-readable storage media such as RAM, ROM, EEPROM, EPROM, flash memory devices, and magnetic disks, and combinations thereof, and may include web storage of a server that performs a storage function of the memory on the internet. Such memory 112 may store data 113 and instructions 114 required for the at least one processor 111 to perform a functional operation such as training an artificial intelligence model or implementing a MoE architecture-based model provision service through the artificial intelligence model.

In one embodiment, the user computing device 110 may store at least one or more machine learning models 120.

In detail, the machine learning models 120 may be various machine learning models such as a plurality of neural networks (e.g., deep neural networks) or other types of machine learning models including nonlinear and/or linear models, and may be configured as a combination thereof.

In this case, the neural networks may include at least one of feed-forward neural networks, recurrent neural networks (e.g., long short-term memory recurrent neural networks), convolutional neural networks, or/and other types of neural networks.

In one embodiment, the user computing device 110 may receive at least one machine learning model 120 from the server computing system 130 via the network 170, store it in the memory 112, and execute the stored machine learning model 120 by the processor 111 to perform a MoE architecture-based model provision service or the like.

In another embodiment, the server computing system 130 may include at least one machine learning model 140 and perform operations using the machine learning model 140, and may provide the user with a MoE architecture-based model provision service by operating in conjunction with the user computing device 110 in a manner that communicates related data to the user computing device 110

For example, the user computing device 110 may perform a MoE architecture-based model provision service via the web in such a way that the server computing system 130 provides output in response to the user's input by using the machine learning model 140.

Additionally, an artificial intelligence model may be implemented in such a way that at least some of the machine learning models 120 and/or 140 are executed on the user computing device 110, while the remaining models are executed on the server computing system 130.

Furthermore, the user computing device 110 may include at least one input component 121 for detecting user input. For example, the user input component 121 may include a touch sensor (e.g., a touch screen and/or touch pad) that detects the touch of a user input medium (e.g., a finger or stylus), an image sensor that detects motion input from the user, a microphone that detects user voice input, buttons, a mouse, and/or a keyboard. In addition, the user input component 121 may include an interface and an external controller (e.g., mouse and/or keyboard) in case it receives input from the external controller through the interface.

The server computing system 130 includes at least one processor 131 and memory 132. Here, the processor 131 may include at least one of a central processing unit (CPU), graphics processing unit (GPU), application-specific integrated circuits (ASICs), digital signal processors (DSPs), digital signal processing devices (DSPDs), programmable logic devices (PLDs), field- programmable gate arrays (FPGAs), controllers, micro-controllers, microprocessors, and/or other electrical units for performing functions or a plurality of electrically connected processors.

In addition, the memory 132 may include one or more non-transitory/transitory computer-readable storage media such as RAM, ROM, EEPROM, EPROM, flash memory devices, and magnetic disks, and combinations thereof. Such memory 132 may store data 133 and instructions 134 required for the processor 131 to perform a functional operation such as training an artificial intelligence model or implementing a MoE architecture-based model provision service through the artificial intelligence model.

In one embodiment, the server computing system 130 may be implemented to include at least one computing device. For example, the server computing system 130 may be implemented to operate a plurality of computing devices according to a sequential computing architecture, a parallel computing architecture, or a combination thereof. Additionally, the server computing system 130 may include a plurality of computing devices connected via the network 170.

Moreover, the server computing system 130 may store at least one machine learning model 140. For example, the server computing system 130 may include, as the machine learning model 140, a neural network and/or other multi-layer nonlinear models. Exemplary neural networks may include feed-forward neural networks, deep neural networks, recurrent neural networks, and convolutional neural networks.

The training computing system 150 includes at least one processor 151 and memory 152. Here, the processor 151 may include at least one of a central processing unit (CPU), graphics processing unit (GPU), application-specific integrated circuits (ASICs), digital signal processors (DSPs), digital signal processing devices (DSPDs), programmable logic devices (PLDs), field-programmable gate arrays (FPGAs), controllers, micro-controllers, microprocessors, and/or other electrical units for performing functions or a plurality of electrically connected processors.

In addition, the memory 152 may include one or more non-transitory/transitory computer-readable storage media such as RAM, ROM, EEPROM, EPROM, flash memory devices, and magnetic disks, and combinations thereof. Such memory 152 may store data 153 and instructions 154 required for the processor 151 to train an artificial intelligence model.

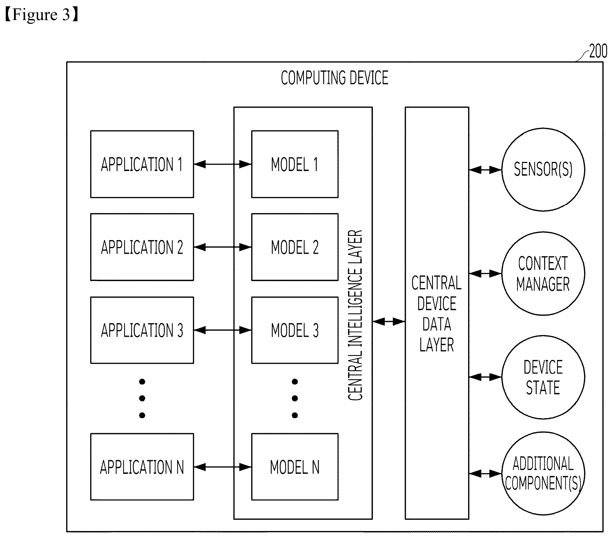

For example, the training computing system 150 may include a model trainer 160 that trains the machine learning model(s) (120 and/or 140) stored in the user computing device 110 and/or the server computing system 130, by using various training or learning techniques such as error backpropagation (in accordance with the framework illustrated in FIG. 3).

By way of example, such a model trainer 160 may perform updates to one or more parameters of the machine learning model(s) 120 and/or 140 by backpropagation based on a defined loss function.

In some implementation examples, performing error backpropagation may include performing truncated backpropagation through time. The model trainer 160 may perform a number of generalization techniques (e.g., weight decay, dropout, and/or knowledge distillation) to enhance the generalization capability of the machine learning model(s) 120 and/or 140 being trained.

In particular, the model trainer 160 may train the machine learning model(s) 120 and/or 140 based on a series of training data 161. Here, the training data 161 may include different forms of data, such as images, audio samples, and/or text, for example. Examples of image types that can be used include video frames, LiDAR point clouds, X-ray images, computed tomography (CT) scans, hyperspectral images, and/or various other forms of images.

Such training data 161 may be provided by the user computing device 110 and/or the server computing system 130. When the training computing device trains the machine learning model(s) 120 and/or 140 on specific data from the user computing device 110, the machine learning model(s) 120 and/or 140 may be characterized as a personalized model.

Additionally, the model trainer 160 includes computer logic utilized to provide desired functionality.

Moreover, the model trainer 160 may be implemented in hardware, firmware, and/or software that controls a general-purpose processor. In one implementation example, the model trainer 160 may include program files stored on a storage device, be loaded into the memory 152, and be executed by one or more processors 151. In another implementation example, the model trainer 160 may include one or more sets of computer-executable data 153 and instructions 154 stored on a tangible computer-readable storage medium, such as RAM, hard disks, or optical or magnetic media.

The network 170 may include, but is not limited to, 3GPP (3rd Generation Partnership Project) network, LTE (Long Term Evolution) network, WiMAX (World Interoperability for Microwave Access) network, Internet, LAN (Local Area Network), Wireless LAN (Wireless Local Area Network), WAN (Wide Area Network), PAN (Personal Area Network), Bluetooth network, satellite broadcasting network, analog broadcasting network, and/or DMB (Digital Multimedia Broadcasting) network.

In general, communication via the network 170 may be performed using any type of wired and/or wireless connection, through various communication protocols (e.g., TCP/IP, HTTP, SMTP, and/or FTP), encodings or formats (e.g., HTML and/or XML), and/or protection schemas (e.g., VPN, secure HTTP, and/or SSL).

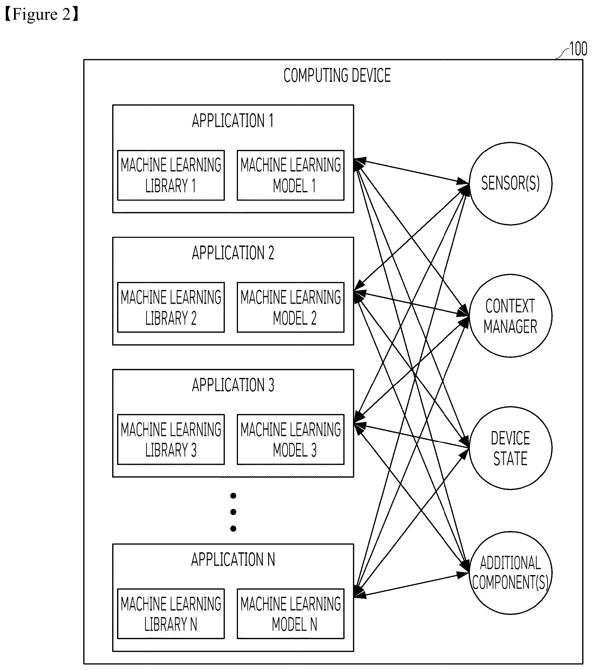

FIG. 2 illustrates an example block diagram of a computing device that implements a MoE architecture-based model provision service according to one embodiment of the present invention.

Referring to FIG. 2, a computing device 100 included in the user computing device 110, the server computing system 130, and the training computing system 150 may include multiple applications (e.g., Application 1 through Application N). Each application may include a machine learning library and one or more machine learning models. For example, the applications may include image processing (e.g., detection, classification, and/or segmentation) applications, text messaging applications, email applications, dictation applications, virtual keyboard applications, browser applications, and/or chat-bot applications.

In the embodiment, the computing device 100 may include a model trainer 160 for training an artificial intelligence model, and may provide output data based on given input data (e.g., text, speech, image, video, and/or specific sensor-based sensing data) by storing and running the trained artificial intelligence model.

Each application of the computing device 100 may communicate with multiple other components of the computing device 100, such as at least one sensor, a context manager, a device state component, and/or additional components, for example. In one embodiment, each application may use an API (e.g., a public API) to communicate with each device component. In one embodiment, the API used by each application may be specific to that application.

FIG. 3 illustrates an example block diagram of another aspect of a computing device that implements a MoE architecture-based model provision service according to one embodiment of the present invention.

Referring to FIG. 3, the computing device 200 includes multiple applications (e.g., Application 1 through Application N). Each application may communicate with a central intelligence layer. For example, the applications may include image processing applications, text messaging applications, email applications, dictation applications, virtual keyboard applications, and/or browser applications. In one embodiment, each application may use an API (e.g., a common API shared across all applications) to communicate with the central intelligence layer (and the models stored therein).

The central intelligence layer may include multiple machine learning models. For example, as illustrated in FIG. 3, at least some of the machine learning models may be provided for each application and managed by the central intelligence layer. In another implementation example, two or more applications may share a single machine learning model. For example, in some implementation examples, the central intelligence layer may provide a single model for all applications. In some implementation examples, the central intelligence layer may be incorporated into the operating system of the computing device 200 or implemented differently.

The central intelligence layer may communicate with a central device data layer. The central device data layer may serve as a centralized data storage location for the computing device 200. As illustrated in FIG. 3, the central device data layer may communicate with multiple other components of the computing device 200, such as one or more sensors, a context manager, a device state component, and/or additional components. In some implementation examples, the central device data layer may use an API (e.g., a private API) to communicate with each device component.

The technology described herein may make reference to servers, databases, software applications, and other computer-based systems, as well as actions taken and information transmitted to or from the above systems. It will be appreciated that the inherent flexibility of computer-based systems allows for a wide range of possible configurations, combinations, divisions of tasks, and functionality between and from components. For example, the processes described herein may be implemented using a single device or component, or multiple devices or components working in combination. Databases and applications may be implemented on a single system or distributed across multiple systems. Distributed components may operate sequentially or in parallel.

### [Artificial Intelligence Agent Specialization Model (AIAM)]

In another aspect, the above computing system 1000 may include an AI agent specialization model AIAM according to an embodiment of the present invention.

Here, the AI agent specialization model AIAM according to the embodiment, which is an AI agent model that uses a MoE (Mixture of Experts) architecture implemented according to the embodiment of the present invention, may be an artificial intelligence mode including a data processing algorithm capable of autonomously acting in specific environments, solving tasks, and achieving goals.

Such an AI agent specialization model AIAM may include a data processing algorithm for implementing a cognitive ability to collect and interpret data from a given environment, a decision mechanism to decide an optimal action based on the collected data, an execution ability to execute the decided action, and a learning ability to improve the action through experience.

As an embodiment, the AI agent specialization model AIAM may obtain given input data (e.g., text, speech, image, video, and/or specific sensor-based sensing data), and based on the obtained input data, perform a given task to provide output data (e.g., response data to a specific query and/or a control signal for a specific instruction).

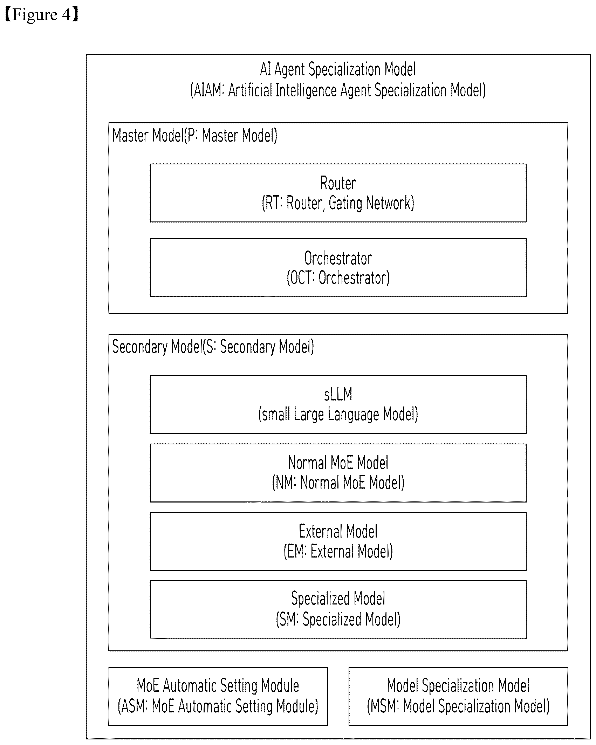

FIG. 4 illustrates an internal block diagram of an AI agent model according to one embodiment of the present invention.

In detail, referring to FIG. 4, the AI agent model according to the embodiment may include at least one router RT (gating network), an orchestrator OCT, a small large language model sLLM, a normal MoE model NM, an external model EM, and/or a specialized model SM.

In this case, in FIG. 4, the AI agent model is described as including the aforementioned components in order to prevent features of the embodiment of the present invention from being obscured.

However, it will be apparent to those skilled in the art that, depending on the embodiment, the AI agent model may further include other general-purpose components in addition to those illustrated in FIG. 4, or some of the components illustrated in FIG. 4 may be omitted.

In more detail, the router RT (gating network) according to the embodiment of the present invention may be an artificial intelligence module that performs task allocation and/or traffic control for a plurality of models within the MoE architecture.

Specifically, the router RT may analyze given input data and/or requested tasks to determine which model is most suitable for processing the data.

In one embodiment, the router RT may determine a model optimized for processing given data based on each model's performance, expertise, and/or previous experience.

Moreover, the router RT may support efficient data processing by distributing a given task to at least one model by taking system load into consideration.

Additionally, the router RT may adjust a task allocated to a specific model by flexibly responding to real-time system changes.

In the embodiment, the router RT may be an artificial intelligence module that selectively determines a model (hereinafter, domain-specific model) that executes a data processing operation optimized for a given domain.

That is, in this embodiment, the router RT may be an artificial intelligence module that selects, from among a plurality of models included in the AI agent specialization model AIAM, a model deemed to perform data processing (e.g., deep learning) most suitable for a given domain.

For reference, the term domain as used herein may refer to data, rules, terminology, problem definitions, and/or processes used by a predetermined AI system to perform a specific task.

In the embodiment, the router RT may perform data analysis based on the features of given input data (e.g., user input and/or specific sensing data) and/or a requested task, identify data processing characteristics optimized for that task based on the analysis, and detect a predetermined model for implementing these and determine it as a domain-specific model.

In other words, the router RT according to the embodiment may be an artificial intelligence module that detects a model capable of most effectively performing data processing for a given domain, allocates and distributes the corresponding task processing operation, and manages it.

In this case, the router RT according to the embodiment may include a router RT pre-trained according to a disclosed predetermined algorithm, a router RT additionally trained according to the embodiment of the present invention, and/or a router RT newly trained using a new method. A detailed description of this will be given in the section [MoE Model Provision Method] below.

Additionally, the router RT according to the embodiment may further perform additional functional operations as disclosed in the section [MoE Model Provision Method] below.

Meanwhile, the orchestrator OCT according to the embodiment of the present invention may be an artificial intelligence module that comprehensively controls and manages the overall configuration of the AI agent specialization model AIAM.

In detail, in the embodiment, the orchestrator OCT may allocate various tasks occurring within the entire system to appropriate resources (e.g., the router RT and/or a predetermined model).

Further, the orchestrator OCT may manage the efficient use of resources, such as available models and hardware resources (e.g., CPU and/or GPU).

Further, the orchestrator OCT may monitor the overall system performance and, when necessary, adjust specific parameters or optimize the network configuration or the like.

Further, the orchestrator OCT may manage the interoperation among a plurality of routers RT and/or models and control data flow and processing processes.

That is, in the embodiment, the orchestrator OCT may perform control and management of the entire system of the AI agent specialization model AIAM, and may serve as a main router RT that controls at least one router RT.

In this case, the orchestrator OCT and the router RT according to the embodiment may closely interoperate with each other to support efficient operation of the MoE system.

Specifically, the orchestrator OCT, as the manager of the entire system, may monitor the performance of the router RT and adjust the strategies of the router RT when necessary.

On the other hand, the router RT may practically execute the allocation of data processing tasks based on instructions from the orchestrator OCT and/or its own algorithm, thereby enabling efficient system control.

In the embodiment, the above-described orchestrator OCT and/or router RT may serve as a master model P that controls and manages the overall system and/or the remaining components (i.e., sLLM, normal MoE model NM, external model EM, and/or specialized model SM) of the AI agent model.

Meanwhile, the sLLM (small large language model) according to the embodiment of the present invention may be an artificial intelligence module that is implemented as a lightweight version of a large language model LLM.

That is, the sLLM may be an artificial intelligence module that is constructed to achieve performance comparable to that of a large-scale model such as LLM by using fewer resources.

In the embodiment, such an sLLM may include a MoE model (MoELM in the embodiment) based on a combination of a plurality of specialized models SM and a router RT according to the embodiment of the present invention, as disclosed in the section [MoE Model Provision Method]. Further, the sLLM may include a MoE model (DMoE model in the embodiment) based on a domain-specific specialized model according to the embodiment of the present invention, as disclosed in the section [Method for Specifying Model Based on MoE] to be described later. A detailed description of this is given in the sections [MoE Model Provision Method] and [Method for Specifying Model Based on MoE].

Additionally, the normal MoE model NM according to the embodiment of the present invention may refer to a predetermined MoE model that is implemented based on a disclosed universal method.

By way of example, the normal MoE model NM may include a switch transformer, conditional computation in neural networks, a sparse mixture of experts, and/or Megatron-LM.

Additionally, the external model EM according to the embodiment of the present invention may refer to a predetermined artificial intelligence model that is implemented according to various disclosed algorithms.

For example, the external model EM may include ChatGPT, Gemini, and/or Llama.

In the embodiment, such an external model EM may be selectively used as necessary to support the processing of a given task.

Additionally, the specialized model SM according to the embodiment of the present invention may refer to an artificial intelligence model that is trained for optimization for a specific purpose.

That is, the specialized model SM may be an artificial intelligence model that is trained using training data and methods specialized to achieve a predetermined objective.

In the embodiment, such a specialized model SM may include a predetermined trained sLLM (including a MoELM and/or DMoE model), a normal MoE model NM, and/or an external Model EM. Further, the specialized model SM may include a specialized module model according to the embodiment of the present invention, as disclosed in the section [Method for Specifying Model Based on MoE] to be described later. A detailed description of this is given in the section [Method for Specifying Model Based on MoE].

In the embodiment, the aforementioned sLLM, normal MoE model NM, external model EM, and/or specialized model SM may be secondary models S capable of performing a specific task under the control and management of the master model P (i.e., orchestrator OCT and/or router RT) of the AI agent model.

### [MoE Model Provision Method]

Hereinafter, a method for implementing a MoE architecture-based model provision service, in which a computing system 1000 according to an embodiment of the present invention provides a MoE (Mixture of Experts) model based on a plurality of independently trained specialized models SM, will be described in detail with reference to the accompanying drawings.

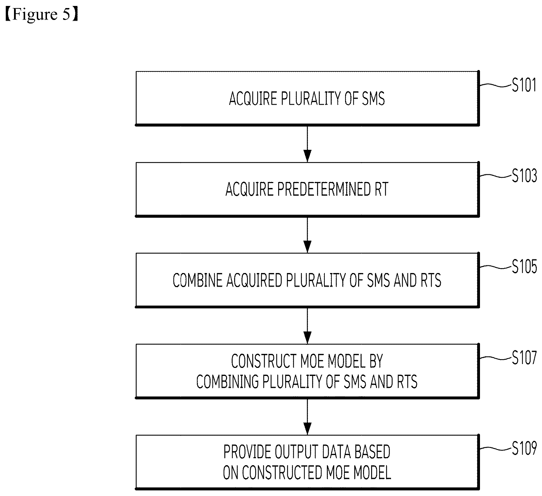

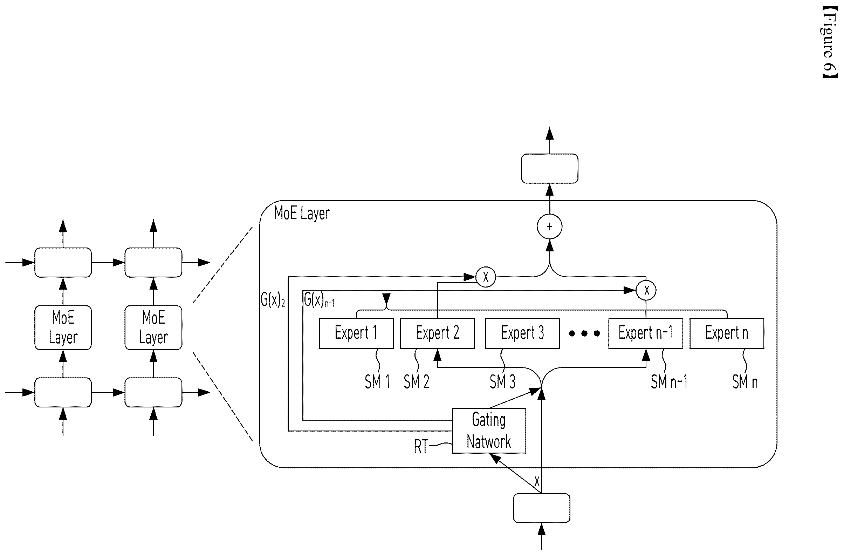

FIG. 5 illustrates a flowchart for explaining a MoE model provision method according to one embodiment of the present invention, and FIG. 6 illustrates a conceptual diagram for explaining a MoE model provision method according to one embodiment of the present invention.

Referring to FIGS. 5 and 6, a method for implementing a MoE architecture-based model provision service, in which a computing system 1000 according to an embodiment of the present invention provides a MoE model based on a plurality of pre-trained specialized models SM, may include: a step S101 of obtaining a plurality of specialized models SM; a step S103 of obtaining a predetermined router RT; a step S105 of combining the obtained plurality of specialized models SM and the obtained router RT; a step S107 of constructing a MoE model based on the combination of the specialized models SM and the router RT; and a step S109 of providing output data based on the constructed MoE model.

Specifically, the computing system 1000 according to an embodiment of the present invention may obtain a plurality of specialized models SM. (S101)

Here, in other words, a specialized model SM according to the embodiment may refer to an artificial intelligence model that is trained for optimization for a specific purpose, meaning an artificial intelligence model that is trained using training data and methods specialized for that purpose.

In the embodiment, such specialized models SM may include a predetermined trained sLLM (including a MoELM and/or DMoE model), a normal MoE model NM, an external model EM, and/or a specialized module model according to the embodiment of the present invention disclosed in the section [Method for Specifying Model Based on MoE] described later.

In detail, in the embodiment, the computing system 1000 may obtain the above plurality of specialized models SM via user input and/or interoperation with an external server.

Additionally, the computing system 1000 according to an embodiment of the present invention may obtain a predetermined router RT. (S103)

Here, in other words, the router RT according to the embodiment may be an artificial intelligence module that performs task allocation and/or traffic control for a plurality of models within the MoE architecture.

In detail, in the embodiment, the computing system 1000 may obtain at least one router RT via user input and/or interoperation with an external server.

In this case, the router RT may include a router RT pre-trained according to a predetermined disclosed algorithm, a router RT additionally trained according to the embodiment of the present invention to be described later, and/or a router RT newly trained using a new method.

Additionally, the computing system 1000 according to an embodiment of the present invention may combine the obtained plurality of specialized models SM and the obtained router RT. (S105)

That is, in the embodiment, the computing system 1000 may combine a plurality of independently trained specialized models SM and a router RT.

Specifically, in the embodiment, the computing system 1000 may construct a single model (hereinafter, MoELM) that operates together with the MoE architecture of FIG. 6 by adding a router RT to a plurality of specialized models SM.

In other words, the computing system 1000 may configure a third MoE using modularized specialized models SM.

In this case, in the embodiment, the computing system 1000 may detect an input data type for each of the plurality of specialized models SM.

Then, the computing system 1000 may perform different types of combination processes depending on whether the detected input data types are identical.

In more detail, in the embodiment, if the input data types of the plurality of specialized models SM are identical, the computing system 1000 may combine the plurality of specialized models SM and the router RT by using the existing router RT as it is.

Specifically, in the embodiment, the computing system 1000 may combine the plurality of specialized models SM and the router RT by integrating the existing router RT's weight values for the respective specialized models SM through a predetermined computation.

As an embodiment, the computing system 1000 may combine the specialized models SM and the router RT by simply summing the existing router RT's weight values for the respective specialized models SM, by summing them through sampling, and/or by summing them according to a specific formula based on user settings.

Through this, the computing system 1000 may combine a plurality of independently trained specialized models SM and a router RT into one without requiring additional training.

On the other hand, in the embodiment, if the input data types of the specialized models SM differ from each other, the computing system 1000 may additionally train the existing router RT to combine the specialized models SM and the router RT.

Hereinafter, for effective explanation, the plurality of specialized models SM will be described as, but not limited to, a first specialized model SM and a second specialized model SM.

In detail, in the embodiment, the computing system 1000 may train the router RT to expand the input data types of the first specialized model SM and the second specialized model SM.

More specifically, the computing system 1000 may integrate the input data for the first specialized model SM and the input data for the second specialized model SM through a predetermined computation, while preserving the original forms of the input data.

Furthermore, the computing system 1000 may train the router RT to use the input data type of the integrated input data as the input data type of the first and second specialized models SM.

In other words, the computing system 1000 may additionally train the router RT to expand the input data types of the first specialized model SM and the second specialized models SM and perform training and operation based on this.

In another embodiment, the computing system 1000 may train the router RT to change the input data types of the first specialized model SM and the second specialized model SM.

Specifically, the computing system 1000 may convert the input data of the first specialized model SM into a weight value to change it into the input data type of the second specialized model SM.

Then, the computing system 1000 may train the router RT to train and run the second specialized model SM using the changed data value.

In the same manner, the computing system 1000 may change the input data of the second specialized model SM into the input data type of the first specialized model SM and then train the router RT to train and run the first specialized model SM using the changed input data.

That is, the computing system 1000 may additionally train the router RT to change the input data types of the first specialized model SM and the second specialized model SM and perform training and operation accordingly.

As such, in the embodiment, the computing system 1000 may combine the plurality of specialized models SM and the router RT, along with additional training to resolve differences in input data type between the specialized models SM, thereby constructing a combined model (i.e., MoELM) that prevents errors arising from this and performs smoother learning and operation.

Meanwhile, in some embodiments, the computing system 1000 may combine the plurality of specialized models SM and the router RT by newly training the existing router RT using a new method.

In detail, in the embodiment, the computing system 1000 may train the router RT to determine which input data should be delivered to which specialized model SM, depending the input data and/or available resources.

In this case, the computing system 1000 may also train the router RT to decide whether to deliver the entire input data or only a portion of it.

Furthermore, in the embodiment, the computing system 1000 may train the router RT to determine how many specialized models SM to activate, depending on the input data and/or available resources.

Furthermore, in the embodiment, the computing system 1000 may train the router RT to assess the quality of output data and accordingly decide which input data should be delivered to which specialized model SM.

Furthermore, in the embodiment, the computing system 1000 may train the router RT to assess data processing speed and/or performance and accordingly decide which input data should be delivered to which specialized model SM.

Furthermore, in the embodiment, the computing system 1000 may train the router RT to assess data processing quality according to initial settings and accordingly decide which input data should be delivered to which specialized model SM.

Furthermore, in the embodiment, the computing system 1000 may train the router RT to decide which input data should be delivered to which specialized model SM, based on target performance and data processing speed inputted by the user.

Furthermore, in the embodiment, the computing system 1000 may train the router RT such that the router RT itself identifies an optimal specialized model SM and delivers input data to that specialized model SM, based on user feedback, reinforcement learning, LLM-based self-feedback, RLHF, and/or RLAIF.

Furthermore, referring further to FIG. 4, in some embodiments, the computing system 1000 may further include an artificial intelligence module (hereinafter, a MoE automatic setting module ASM) that learns a predetermined existing MoE architecture and automatically sets a new MoE based on it.

Furthermore, the computing system 1000 may use the aforementioned MoE automatic setting module ASM to configure the training and operation of the router RT.

In this case, once the MoE automatic setting module ASM completes the settings for the router RT, it may cease performing any further operations.

Additionally, in some embodiments, the computing system 1000 may train the router RT to implement the functional operations of the aforementioned MoE automatic setting module ASM.

As such, in the embodiment, the computing system 1000 may execute various new router (RT) training processes so that the plurality of specialized models SM and the router RT are seamlessly combined with each other.

Thus, the computing system 1000 can more reliably ensure the performance and quality of the combined model (i.e., MoELM).

In addition, the computing system 1000 according to an embodiment of the present invention may construct a MoE model by combining the plurality of specialized models SM and the router RT. (S107)

That is, in the embodiment, the computing system 1000 may construct a single model (i.e., MoELM) that operates together with the MoE architecture by combining the plurality of specialized models SM and the router RT as described above.

In this case, in some embodiments, the MoELM may be included in the sLLM according to the embodiment of the present invention.

In other words, the sLLM according to the embodiment may include the MoELM constructed according to the embodiment of the present invention.

In addition, the computing system 1000 according to an embodiment of the present invention may provide output data based on the constructed MoE model. (S109)

That is, in the embodiment, the computing system 1000 may provide output data (e.g., response data to a specific query and/or a control signal for a specific instruction) for given input data (e.g., text, speech, image, video, and/or specific sensor-based sensing data) by using the MoELM constructed as above.

As described above, in the embodiment, the computing system 1000 may combine individually trained specialized models SM with a router RT to run them together with the MoE architecture, and may provide corresponding output data.

In other words, the computing system 1000 may generate and provide output data from task processing based on given input data using a combined model (i.e., MoELM) constructed in the form of a MoE by aggregating independently trained standalone models.

Through this, in the embodiment, the computing system 1000 can implement a MoE mechanism that achieves highly efficient data processing without unnecessary wasting of resources by utilizing small-sized models optimized for a given task, unlike conventional MoE methods that operate while maintaining large-sized models overall.

Thus, the computing system 1000 can support various services using an improved form of the MoE model that preserves the advantages of conventional MoE approaches (e.g., faster pre-training speed compared to FFN, faster inference speed compared to models of the same size, and/or enhanced instruction tuning performance), while minimizing their disadvantages (e.g., high level of necessity of VRAM and/or various challenges during fine-tuning). As a result, the performance and quality of these services can be directly improved.

### [Method for Specifying Model Based on MoE]

Hereinafter, a method for implementing a MoE (Mixture of Experts) architecture-based model provision service, in which a computing system 1000 according to an embodiment of the present invention implements modularization of a given specialized model SM within a MoE model, will be described in detail with reference to the accompanying drawings.

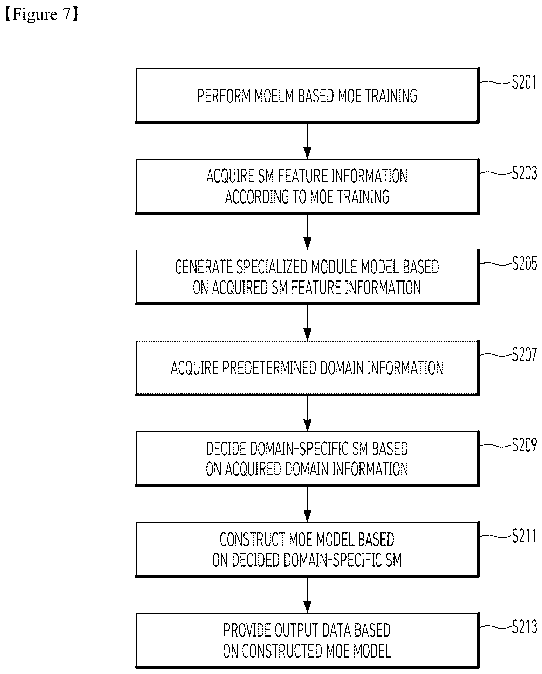

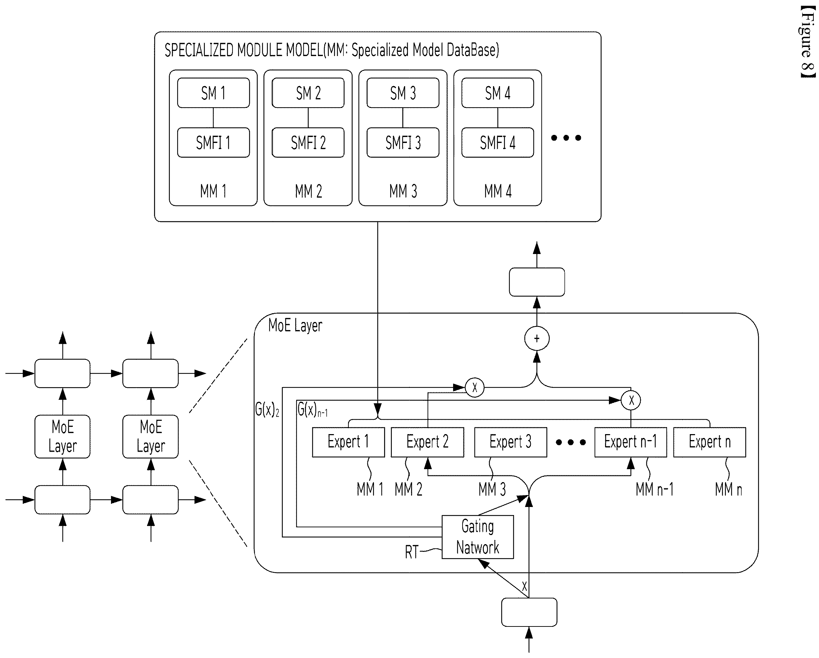

FIG. 7 illustrates a flowchart for explaining a method for specifying a model based on MoE according to one embodiment of the present invention, and FIG. 8 illustrates a conceptual diagram for explaining a method for specifying a model based on MoE according to one embodiment of the present invention.

Referring to FIGS. 7 and 8, a method for implementing a MoE architecture-based model provision service, in which a computing system 1000 according to an embodiment of the present invention implements modularization of a specialized model SM included in a MoE model may include a step S201 of performing MoE training based on MoELM; a step S203 of obtaining specialized model (SM) feature information from the MoE training; a step S205 of generating a specialized module model based on the obtained specialized model (SM) feature information; a step S207 of obtaining given domain information; a step S209 of determining a domain-specific specialized model based on the obtained domain information; a step S211 of constructing a MoE model based on the determined domain-specific specialized model; and a step S213 of providing output data based on the constructed MoE model.

Specifically, in many cases, it is difficult to distinguish or identify which domain a general pre-trained specialized model SM is optimized for.

As a result, certain limitations may arise in selecting and utilizing a specialized model SM that is most optimized for a given task.

To address this issue, in the embodiment of the present invention, the computing system 1000 may perform the following process in which it specifies a role and/or function of each specialized model SM, modularizes them, and based on this, effectively selects and utilizes a customized specialized model SM optimized for a specific domain.

Specifically, the computing system 1000 according to an embodiment of the present invention may perform MoE training based on MoELM. (S201)

That is, in the embodiment, the computing system 1000 can perform MoE training based on MoELM constructed according to the above-described [MoE model provision method].

In this case, as the training is performed, the computing system 1000 may implement training for each of the plurality of specialized models SM included in the MoELM.

In other words, as the above training is performed, the plurality of specialized models SM within the MoELM may be individually trained.

Here, in other words, a specialized model SM according to the embodiment may refer to an artificial intelligence model that is trained for optimization for a specific purpose, meaning an artificial intelligence model that is trained using training data and methods specialized for that specific purpose.

In the embodiment, such specialized models SM may include a predetermined trained sLLM (including a MoELM and/or DMoE model), a normal MoE model NM, an external model EM, and/or a specialized module model MM according to the embodiment of the present invention disclosed below.

In addition, the computing system 1000 according to an embodiment of the present invention may obtain specialized model feature information SMFI from the MoE training. (S203)

Here, the specialized model feature information SMFI according to the embodiment may refer to information that specifies a role and/or function of a given specialized model SM.

In more detail, referring further to FIG. 4, in the embodiment, the computing system 1000 may further include a model specialization module MSM according to the embodiment of the present invention.

Further, the computing system 1000 may obtain the above-described specialized model feature information SMFI via interoperation with the model specialization module MSM.

Here, the model specialization module MSM according to the embodiment of the present invention may be an artificial intelligence module that generates and outputs specialized model feature information SMFI corresponding to a given specialized model SM based on MoE training.

Specifically, in the embodiment, the model specialization module MSM may monitor and track how a task for each specialized model SM is allocated by the router RT when the above-described MoE training is performed.

That is, in the embodiment, the model specialization module MSM may identify which task the router RT distributes and allocates to which specialized model SM as the MoELM is trained and run.

In some embodiments, the model specialization module MSM may generate a tag for specifying each allocated task being tracked and manage how the tag is matched.

Through this, in the embodiment, the model specialization module MSM may assess the expertise of each of the plurality of specialized models SM.

Additionally, in the embodiment, the model specialization module MSM may generate specialized model feature information SMFI corresponding to each specialized model SM, based on the assessed expertise of each specialized model SM.

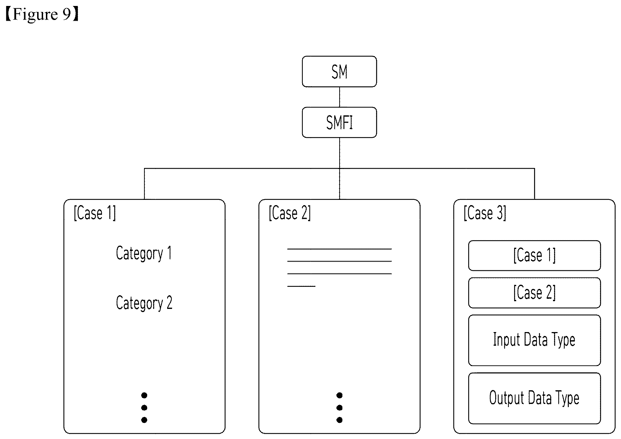

FIG. 9 illustrates an example of specialized model feature information SMFI according to one embodiment of the present invention.

In this case, referring to FIG. 9, in the embodiment, the model specialization module MSM may generate the above-described specialized model feature information SMFI in at least one of the following cases:

[Case 1] Specialized model feature information SMFI that selects one category among role- and/or function-specific categories (e.g., query answering or device control) of a preset specialized model SM based on user input.

[Case 2] Specialized model feature information SMFI that specifies a role and/or function of a specialized model SM in natural language.

[Case 3] Specialized model feature information SMFI that specifies a role and/or function of a specialized model SM using at least one of Case 1 and Case 2 and further defines input data and output data of the specialized model SM.

Subsequently, in the embodiment, the model specialization module MSM may provide the above generated specialized model feature information SMFI to the computing system 1000 as output data.

Accordingly, in the embodiment, the computing system 1000 may obtain feature information for each specialized model SM through interoperation with the model specialization module MSM.

Furthermore, in the embodiment of the present invention, the computing system 1000 may generate a specialized module model MM based on the obtained specialized model feature information SMFI. (S205)

Here, the specialized module model MM according to the embodiment of the present invention may refer to a specialized model SM that is matched with given specialized model feature information SMFI.

Here, the specialized module model MM according to the embodiment of the present invention may refer to a specialized model SM that is matched with given specialized model feature information SMFI, and that is independent and discrete.

In detail, in the embodiment, the computing system 1000 may match the specialized model feature information SMFI obtained as described above with the corresponding specialized model SM.

Additionally, in the embodiment, the computing system 1000 may organize each specialized model SM matched with the specialized model feature information SMFI independently and discretely in a database.

That is, in the embodiment, the computing system 1000 may perform modularization by matching each specialized model SM with the corresponding SMFI and storing and managing them separately and discretely.

Accordingly, the computing system 1000 may generate a specialized module model MM, which is a specialized model SM that is matched with the specialized model feature information SMFI, and that is independent and discrete.

As such, in the embodiment, the computing system 1000 can identify a feature of each specialized model SM within a given MoE model (MoELM in the embodiment) and modularize each specialized model SM into a compact size that allows for reuse and sharing by reflecting the feature.

Therefore, the computing system 1000 can more accurately, quickly, and efficiently sort and select specialized models SM that implement a data processing process optimized for a specific domain and, based on this, facilitate flexible expansion or reduction of the MoE model.

Furthermore, the computing system 1000 according to an embodiment of the present invention may obtain given domain information. (S207)

Here, the term domain information as used herein may refer to information that defines a domain that specifies data, rules, terminology, problem definitions, and/or processes used by a given AI system to perform a given task.

Specifically, in the embodiment, the computing system 1000 may obtain given input data (e.g., text, speech, images, video, and/or specific sensor-based sensing data).

Additionally, in the embodiment, the computing system 1000 may identify a domain corresponding to the obtained input data.

In this case, in the embodiment, a method for the computing system 1000 to identify a domain for input data may be performed based on various disclosed algorithms capable of performing this method, and the embodiment of the present invention does not limit or restrict the algorithms.

Accordingly, in the embodiment, the computing system 1000 may obtain domain information for the task to be processed.

Furthermore, the computing system 1000 according to the embodiment of the present invention may determine a domain-specific specialized model based on the obtained domain information (S209)

Here, the domain-specific specialized model according to the embodiment may refer to a specialized model SM that performs a data processing operation (e.g., deep learning) optimized for a given domain.

In detail, referring further to FIG. 8, in the embodiment, the computing system 1000 may determine at least one domain-specific specialized model based on the domain information and specialized model feature information SMFI obtained as described above.

In more detail, in the embodiment, the computing system 1000 may detect at least one piece of specialized model feature information SMFI that has a feature corresponding to the obtained domain information.

For example, if the computing system 1000 identifies "a feature of a task of outputting response data for given query data" based on first domain information, it may detect at least one piece of specialized model feature information SMFI from a database of a plurality of specialized models' feature information SMFI, specified as having "a role and/or function specialized in answering queries".

In this case, in some embodiments, the computing system 1000 may detect at least one piece of specialized model feature information SMFI corresponding to the domain information, based on a plurality of tags generated by the model specialization module MSM for each task the router RT allocates to the plurality of specialized models SM, during the above-described MoE architecture-based training.

That is, in some embodiments, the computing system 1000 may detect at least one piece of specialized model feature information SMFI corresponding to the domain information by comparing the domain information with the plurality of tags generated as described above.

In this case, in some embodiments, the computing system 1000 may filter the tags to be compared based on the time at which each tag is generated.

Specifically, the computing system 1000 may designate at least one tag generated at a specific task's allocation time as the tag(s) to be compared, according to user input and/or a preset internal process.

By way of example, the computing system 1000 may designate, as the tag(s) to be compared, at least one tag generated for a task allocated after a preset time during the entire training period, based on the observation that the task allocation accuracy improves as the learning rate increases.

Accordingly, the computing system 1000 may detect at least one piece of specialized model feature information SMFI corresponding to the domain information by comparing the domain information with at least one filtered tag that ensures higher accuracy.

Moreover, in the embodiment, the computing system 1000 may extract a specialized model SM (i.e., a specialized module model MM) matched with each of the at least one specialized model's detected feature information SMFI.

In addition, in the embodiment, the computing system 1000 may determine the at least one extracted specialized module model MM as a domain-specific specialized model(s).

Furthermore, the computing system 1000 according to an embodiment of the present invention may construct a MoE model based on the determined domain-specific specialized model(s). (S211)

Referring further to FIG. 8, that is, in the embodiment, the computing system 1000 may construct a single model (hereinafter, DMoE model) that operates together with the MoE architecture based on the at least one domain-specific specialized model determined as described above.

In other words, the computing system 1000 may construct a MoE model (i.e., DMoE model) that implements data processing optimized for a specific domain by using at least some (i.e., domain-specific specialized model(s)) of a plurality of specialized models SM modularized in a small size.

In detail, in the embodiment, the computing system 1000 may construct the above-described DMoE model by combining at least one domain-specific specialized model with a predetermined router RT.

In this case, in the embodiment, a concrete method in which the computing system 1000 constructs the DMoE model by combining a domain-specific specialized model and a router RT may be based on the description of the method for constructing MoELM by combining a plurality of expert models SM and a router RT, as disclosed in the above-described [MoE Model Provision Method].

Accordingly, in the embodiment, the computing system 1000 may construct a DMoE model including a domain-specific specialized models and a router RT.

In this case, in some embodiments, the DMoE model may be included in an sLLM according to the embodiment of the present invention.

In other words, the sLLM according to the embodiment may include a DMoE model constructed according to the embodiment of the present invention.

Furthermore, the computing system 1000 according to an embodiment of the present invention may provide output data based on the constructed MoE model. (S213)

That is, in the embodiment, the computing system 1000 may provide output data (e.g., response data to a specific query and/or a control signal for a specific instruction) for given input data (e.g., text, speech, image, video, and/or specific sensor-based sensing data) by using the DMoE model constructed as described above.

As described above, in the embodiment, the computing system 1000 can specify a role and/or function of each specialized model SM, separate and modularize them individually into a reusable and shareable size, and rapidly and flexibly construct a customized MoE model (i.e., DMoE model) optimized for a specific domain using such a modularized specialized model and provide given output data through efficient task processing using the constructed model.

In other words, in the embodiment, the computing system 1000 can implement and provide a MoE model with enhanced data processing (and/or computational) speed and improved inference performance and support a variety of services accordingly, thereby effectively promoting improvements in performance and quality.

### [Method for Providing AI Agent Based on MoE-Applied LLM]

Hereinafter, a method for implementing a MoE architecture-based model provision service, in which a computing system 1000 according to an embodiment of the present invention determines an application model optimized for a domain according to an external environment based on a MoE (Mixture of Experts)-applied LLM (Large Language Model) and provides an on-device-specific AI (Artificial Intelligence) agent that performs output based on the determined application model, will be described in detail with reference to the accompanying drawings.

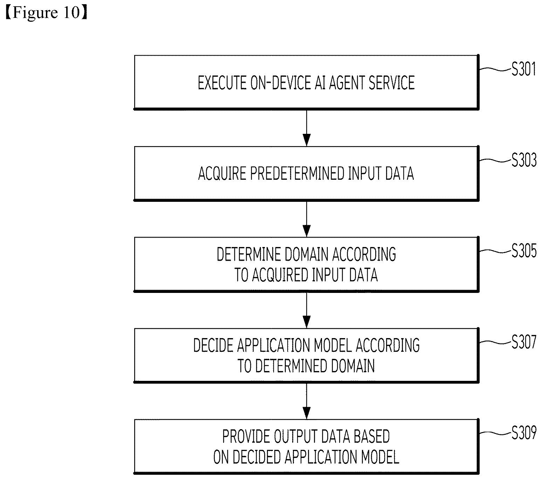

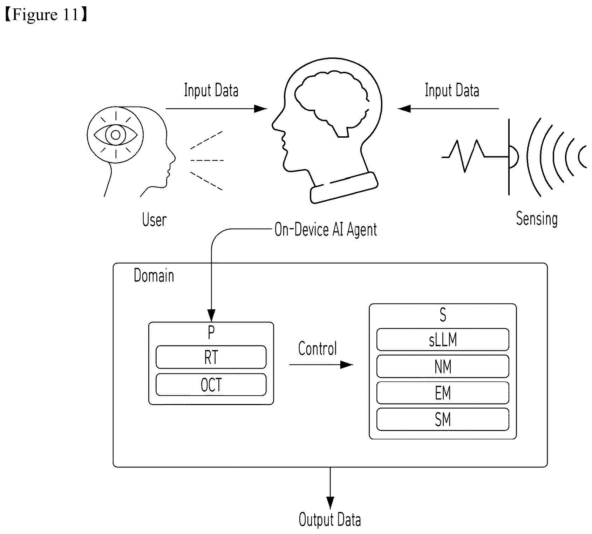

FIG. 10 illustrates a flowchart for explaining a method for providing an AI agent based on a MoE-applied LLM according to one embodiment of the present invention, and FIG. 11 shows a conceptual diagram for explaining a method for providing an AI agent based on a MoE-applied LLM according to one embodiment of the present invention.

Referring to FIGS. 10 and 11, a method for implementing a MoE architecture-based model provision service, in which a computing system 1000 according to an embodiment of the present invention determines an application model optimized for a domain according to an external environment based on a MoE (Mixture of Experts)-applied LLM (Large Language Model) and provides an on-device-specific AI (Artificial Intelligence Agent) agent that performs output based on the determined application model, may include: a step S301 of executing an on-device AI agent service; a step S303 of obtaining given input data; a step S305 of identifying a domain for the obtained input data; a step S307 of determining an application model for the identified domain; and a step S309 of providing output data based on the determined application model.

Specifically, the computing system 1000 according to an embodiment of the present invention may execute an on-device AI agent service. (S301)

Here, for reference, the on-device AI may refer to a technology that performs artificial intelligence-based data processing directly within the user's device, rather than relying on cloud or external servers. Since all processing is completed within the device without transmitting data externally, this approach offers advantages such as personal information protection, real-time processing, and reduced dependency on internet connectivity.

Accordingly, in relation to this, the term on-device AI agent service may refer to various services implemented using on-device AI.

By way of example, on-device AI agent services may include smartphone voice assistant services (e.g., Google Assistant, Apple Siri, Samsung Bixby, etc.), smart camera services (e.g., Google Pixel's HDR+, Apple's Deep Fusion, etc.), fitness tracker and smartwatch services (e.g., Apple Watch, Fitbit, etc.), autonomous driving systems (e.g., Tesla's Autopilot, etc.), and/or home security services (e.g., Nest Secure, Ring, etc.).

In the embodiment, the computing system 1000 may execute a predetermined on-device AI agent service via interoperation with an AI Agent Specialization Model AIAM according to the embodiment of the present invention and/or a given application.

Furthermore, the computing system 1000 according to an embodiment of the present invention may obtain given input data. (S303)

In detail, in the embodiment, the computing system 1000 may obtain at least one input data (e.g., given text, speech, image, video, and/or sensing data) via user input based on the on-device AI agent service executed as above and/or via interoperation with an external device (e.g., a given sensor).

In the embodiment, the input data obtained as above may include given data that can specify a target task for data processing.

Furthermore, the computing system 1000 according to an embodiment of the present invention may identify a domain for the obtained input data. (S305)

Here, in other words, the term domain as used herein may refer to data, rules, terminology, problem definitions, and/or processes used by a given AI system to perform a given task.

In detail, in the embodiment, the computing system 1000 may identify a domain corresponding to the obtained input data.

In this case, in the embodiment, a method for the computing system 1000 to identify a domain for input data may be performed based on various disclosed algorithms capable of performing the method, and the embodiment of the present invention does not limit or restrict the algorithms.

Accordingly, in the embodiment, the computing system 1000 may obtain domain information for the task to be processed.

Furthermore, the computing system 1000 according to an embodiment of the present invention may determine an application model for the identified domain. (S307).

Here, the term application model as used herein may refer to a model that performs a given task based on given input data.

In the embodiment, such an application model may be at least one of the secondary models S described above.

In this case, in other words, the term secondary model S according to the embodiment may refer to a model capable of performing a specific task under the control and management of a master model P (i.e., orchestrator OCT and/or router RT) which is responsible for the control and management of a predetermined AI system operation.

In the embodiment, such a secondary model S may include at least one of sLLM (including a MoELM and/or DMoE model), a normal MoE model NM, an external Model EM, and/or a specialized model SM (including a specialized module model MM).

In detail, in the embodiment, the computing system 1000 may determine at least one application model based on the domain information obtained as described above.

More specifically, in the embodiment, the computing system 1000 may detect at least one model (i.e., domain-specific model) that executes a data processing (e.g., deep learning) operation optimized for given domain information, among the aforementioned secondary models S, by interoperating with a master model P (i.e., orchestrator OCT and/or router RT) according to the embodiment of the present invention.

In this case, in the embodiment of the present invention, a concrete method in which the computing system 1000 detects a domain-specific model by interoperating with a master model P will be omitted as the description of the router RT and orchestrator OCT disclosed in the above-described [AI Agent Specialization Model (AIAM)] shall apply.

Moreover, in the embodiment, the computing system 1000 may determine the at least one detected one domain-specific model as an application model.

Furthermore, the computing system 1000 according to an embodiment of the present invention may provide output data based on the determined application model. (S309)

That is, in the embodiment, the computing system 1000 may generate and provide output data (e.g., response data to a specific query and/or a control signal for a specific instruction) for given input data (e.g., text, speech, image, video, and/or specific sensor-based sensing data) based on at least one application model determined through the AI agent specialization model AIAM as described above.

In other words, the computing system 1000 may perform a predetermined requested task based on given input data by using the application model determined as above, and may provide output data from the performed data processing.

In this case, in the embodiment, the computing system 1000 may provide the output data based on the above-described on-device AI agent service.

As described above, in the embodiment, the computing system 1000 may effectively determine a model optimized for data processing for a given domain even in an on-device environment, based on an AI agent specialization model AIAM including models (e.g., MoEL, DMoE model, and/or specialized module model MM) implemented by using MoE architecture according to the embodiment of the present invention, and may provide output from effective data processing through the determined model.

That is, the computing system 1000 may implement and provide an artificial intelligence model (i.e., AI agent specialization model AIAM)) capable of better understanding, interpreting, executing, and responding to a given task in any environment.

Accordingly, in the embodiment, the computing system 1000 may significantly and directly enhance the quality and performance of various AI agent-based services (e.g., smartphone voice assistant services, smart camera services, fitness tracker and smartwatch services, autonomous driving services, and/or home security services).

The embodiments of the present invention described above may be implemented in the form of program instructions that can be executed through various computer components and recorded on a computer-readable medium. The computer readable medium may include program instructions, data files, data structures, and the like alone or in combination. The program instructions recorded on the computer-readable recording medium may be specially designed and configured for the present invention, or may be known and available to those skilled in computer software. Examples of the computer-readable recording medium include: magnetic media such as hard disks, floppy disks, and magnetic tape; optical media such as CD-ROMs and DVDs; magneto-optical media such as floptical disks; and hardware devices such as ROM, RAM, and flash memory specifically configured to store and execute program instructions. Examples of the program instructions include machine language codes such as those generated by a compiler, as well as high-level language codes that can be executed by a computer using an interpreter or the like. The hardware devices may be configured to act as one or more software modules in order to perform processing according to the present invention, and vice versa.

The specific implementations described in the present invention are exemplary embodiments, and do not limit the scope of the present invention in any way. For brevity of the specification, descriptions of conventional electronic configurations, control systems, software, and other functional aspects of the systems may be omitted. In addition, the connections or connection members of lines between the components shown in the drawings are illustrative examples of functional connections and/or physical or circuit connections, and in actual devices, may be shown as alternative or additional various functional connections, physical connections, or circuit connections. In addition, unless specifically mentioned, such as "essential", "importantly", etc., the components described herein may not be necessary components for application of the present invention.

Furthermore, although the detailed description of the present invention has been provided with reference to preferred embodiments of this invention, those skilled in the art or having ordinary knowledge in the relevant technical field will understand that the present invention may be variously modified and changed without departing from the spirit and scope of the invention as defined in the claims that follow. Accordingly, the technical scope of the present invention should not be limited to the content described in the detailed description of the specification, but should be defined by the scope of the appended claims.

### [Industrial Applicability]

The present invention relates to a method for specifying a model based on an artificial intelligence model including a plurality of models and a system therefor, which have industrial applicability since they are applicable to the artificial intelligence industry.

## Claims

1. A method in which a computing system including a memory and a processor specifies a model based on an artificial intelligence model including a plurality of models, the method comprising:
performing MoE (Mixture of Experts) architecture-based training based on an artificial intelligence model which is a combination of a plurality of specialized models and a router (gating network);
obtaining specialized model feature information which is information that specifies features of the specialized models based on the performed MoE architecture-based training;
generating a specialized module model which is a specialized model that is matched with the obtained specialized model feature information and is independent and discrete;
obtaining given domain information;
detecting specialized model feature information of a feature corresponding to the obtained domain information;
extracting a specialized module model that is matched with the detected specialized model feature information;
constructing a DMoE model which is an artificial intelligence model which is a combination of the extracted specialized module model and the router; and
providing output data for given input data based on the constructed DMoE model.

2. The method of claim 1, wherein the specialized model is an independently pre-trained artificial intelligence model, and the router is an artificial intelligence module that controls a model task.

3. The method of claim 2, wherein the obtaining of specialized model feature information comprises:
monitoring how a task for each of the plurality of specialized models is allocated by the router during the MoE architecture-based training; and
obtaining the specialized model feature information for each of the plurality of specialized models based on the monitored task allocation state.

4. The method of claim 3, wherein the specialized model feature information includes first type information which specifies one of preset specialized model feature categories based on user input.

5. The method of claim 3, wherein the specialized model feature information includes second type information which specifies a feature of the specialized model in natural language.

6. The method of claim 3, wherein the specialized model feature information includes at least one of first type information, which specifies one of preset specialized model feature categories based on user input, and second type information, which specifies a feature of the specialized model in natural language, and includes third type information which further specifies input data and output data of the specialized model.

7. The method of claim 2, wherein the generating of a specialized module model comprises:
matching the obtained specialized model feature information with a specialized model corresponding to the specialized model feature information; and
organizing each specialized model matched with the specialized model feature information separately and discretely in a database.

8. The method of claim 2, wherein the domain information is information that defines a domain that specifies at least one feature among data, rules, terminology, problem definitions, and processes for a given task.

9. The method of claim 8, wherein the obtaining of the domain information comprises:
obtaining given input data; and
identifying a domain corresponding to the obtained input data.

10. The method of claim 3, wherein the obtaining of specialized model feature information further comprises generating a tag for specifying each task allocated by the router, and
the detecting of specialized model feature information corresponding to the domain information comprises detecting specialized model feature information of a feature corresponding to the domain information by comparing the at least one generated tag with the domain information.

11. The method of claim 10, wherein the detecting of specialized model feature information corresponding to the domain information further comprises filtering the at least one generated tag based on the time the tag is generated.

12. A system for specifying a model based on an artificial intelligence model including a plurality of models, the system comprising:
at least one memory; and
at least one processor that retrieves at least one application stored in the memory and specifies a model based on an artificial intelligence model including a plurality of models,
wherein instructions of the processor include instructions for performing the steps:
performing MoE (Mixture of Experts) architecture-based training based on an artificial intelligence model which is a combination of a plurality of specialized models and a router (gating network);
obtaining specialized model feature information which is information that specifies features of the specialized models based on the performed MoE architecture-based training;
generating a specialized module model which is a specialized model that is matched with the obtained specialized model feature information and is independent and discrete;
obtaining given domain information;
detecting specialized model feature information of a feature corresponding to the obtained domain information;
extracting a specialized module model that is matched with the detected specialized model feature information;
constructing a DMoE model which is an artificial intelligence model which is a combination of the extracted specialized module model and the router; and
providing output data for given input data based on the constructed DMoE model.
